Europäisches Patentamt

European Patent Office

Office européen des brevets

(11) Publication number: **0 395 281**
**A2**

(12) **EUROPEAN PATENT APPLICATION**

(21) Application number: **90304047.5**

(22) Date of filing: **12.04.90**

(51) Int. Cl.⁵: **G06F 9/46**

(30) Priority: **27.04.89 US 344256**

(43) Date of publication of application:
**31.10.90 Bulletin 90/44**

(84) Designated Contracting States:
**AT BE CH DE DK ES FR GB GR IT LI LU NL SE**

(71) Applicant: **DIGITAL EQUIPMENT
CORPORATION
111 Powdermill Road
Maynard Massachusetts 01754-1418(US)**

(72) Inventor: **Sites, Richard L.
21 Warren Street
Boylston, Massachusetts 01505(US)**

(74) Representative: **Hale, Peter et al
Kilburn & Strode 30 John Street
London WC1N 2DD(GB)**

(54) **Method and apparatus for relating diagnostic information to specific computer instructions.**

㊸ A computer system 10 employs an apparatus for controllably generating interrupts to the computer system processor 12 in order to correlate a significant event occurring within the computer system to the value stored within the program counter at the time of the significant event. In this manner, the apparatus is useful for diagnosing the performance of the computer system. The apparatus includes at least one pair of 16-bit binary counters 42, 44, each having inputs connected through respective multiplexers 50, 52 to a variety of significant event signals. For example, the computer system 10 typically employs a cache where significant time can be wasted by repeated "misses" within the cache. By selecting the cache "miss" signal to be counted by the 16-bit binary counters 42, 44, a signal is generated approximately every 64,000 "misses." The output of the counters 42, 44 are connected to high priority input ports 30, 32 of the processor 12 so as to generate an interrupt that will ordinarily be handled immediately upon the completion of the current instruction being executed. The software interrupt routine retrieves the instantaneous value of the program counter and places that value within a buffer, which is subsequently written to a file in main memory. Thus, at the completion of the program currently being executed, a file within the main memory contains an incidence chart of the particular instructions that generated the cache "misses."

Fig. 2

# METHOD AND APPARATUS FOR RELATING DIAGNOSTIC INFORMATION TO SPECIFIC COMPUTER INSTRUCTIONS

This invention relates generally to a performance counter that correlates significant events within a computer system to the particular computer instruction that caused the significant event and, more particularly, to a processor that generates its own interrupt as a function of its performance.

With the advent of high-speed computers, the electronic hardware required to realize these higher speed machines has become increasingly complex. The interaction of this complex hardware has become difficult to predict and test. For example, these high-speed computers typically employ caches, translation buffers, and instruction buffers. Each of these devices typically maintains data or instructions that the computer expects to use sometime in the near future.

However, the process used to predict which data or instructions will be used in the future is not 100% accurate. Accordingly, occasional misses will occur, thereby slowing the overall operation of the computer. Clearly, it is desirable that the number of misses be minimized. Unfortunately, these devices are typically contained within a larger integrated circuit and are not directly accessible by a computer programmer. Therefore, prior computer systems have typically employed electronic performance counters to keep track of the number of misses that occur during the operation of the computer program.

Electronic performance counters have typically been used in prior computer systems to aid users in understanding how well the computer is performing. In particular, the performance counters have been configured to count such significant events as cache misses, translation buffer misses, instruction buffer misses, or vector instructions issued.

In this manner, the user may simply inspect the values of the counters at the end of a particular program to determine if the counters have reached an inordinately high level. For example, a large number of cache misses is indicative of an inherent problem in the caching strategy. Therefore, based on the information derived from the performance counters, the computer designers may wish to revise the overall caching strategy, or the programmer may modify the coding of the particular computer program being tested.

However, these performance counters are typically started at the beginning of a user program and then read at the end of the program. Thus, the counters contain no practical information on which section of the user program is actually responsible for generating the large number of significant events in the performance counters. Such counters are useful for understanding aggregate behavior of a computer system, but they are less useful for determining how to modify the user program or operating system to enhance the overall computer performance. In other words, these performance counters are capable of identifying that a problem exists, but not what the cause of the problem is.

One example of such a performance counter is described in Digital Equipment Corporation's "Guide To VAX Performance and Coverage Analyzer," August 1987. The performance and coverage analyzer (PCA) has several modes of operation. In the first mode of operation the PCA periodically samples the program counter (PC) in order to determine which computer instruction is consuming the most operating time of the central processing unit (CPU). The PCA samples the PC by establishing a timer asynchronous trap routine that is activated approximately every 10 milliseconds. Thus, every 10 milliseconds the PCA samples the PC and stores the value retrieved from the PC. Accordingly, over a relatively long period of time, the computer instructions corresponding to the stored PC values that occupy the most significant amounts of CPU time have the highest incidence rate. In other words, PC sampling provides a broad measure of which computer instructions are occupying the most CPU time.

While PC sampling is an effective way to measure CPU performance, there are outside factors that influence the accuracy of such a system. For example, the overall system load at the time of PC sampling affects the number of PC values that the PCA gathers. Program execution slows down as more demands are made on the system CPU, thereby causing more 10 millisecond time periods to elapse and artificially raising the number of PC values that are stored. In other words, the more heavily loaded the CPU, the slower it runs and the slower the CPU runs, the more PC samples that are taken. Thus, it should be apparent that operating the same program on a more heavily loaded CPU will generate a higher count for individual computer instructions. This information could erroneously lead one to believe that the program being analyzed is spending more time executing those computer instructions indicated by the PC sampling than it actually did.

PC sampling provides correct and repeatable results if the PCA supplies enough PC values for statistically significant results. When collecting PC values under ideal conditions, the chances of finding the PC in a given address range is proportional to the amount of time that the program actually spends in that address range. However, when less than ideal conditions exist, the results of PC sampling may be misleading or distorted.

One example of a less than ideal condition is when the system load changes significantly during the PC sampling session. This condition may force the program being analyzed to share the system with a CPU-intensive process. As discussed above, this would cause the program to run more slowly in real time, produce more 10 millisecond intervals, and collect a greater than average number of PC values. Now, consider that the other process may terminate part way through the PC sampling run. If this occurs, then the second half of the PC sampling run executes at full speed, experiences fewer 10 millisecond intervals, and collects fewer PC values than it did in the first portion of the PC sampling run. Under these conditions, the PC sampling data would lead one to believe that more time was spent in the first half of the program than in the second half. This conclusion is misleading because on an evenly loaded system both halves of the program would have consumed equal amounts of time.

The present invention is directed to overcoming one or more of the problems as set forth above.

The primary object of the present invention is to provide a performance counter that keeps track of significant events and identifies a particular instruction responsible for generating such significant events.

Another object of the present invention is to provide a performance counter capable of generating an interrupt to a computer system in response to detecting a preselected number of significant events.

Yet another object of the present invention is to provide a processor capable of interrupting itself as a function of its own performance.

To attain these and other objectives an apparatus is provided for controllably generating interrupts to a processor in a computer system to correlate a significant event to the value stored in the program counter at the time of the significant event. The apparatus includes means for counting the number of preselected significant events that occur during the operation of the processor. Means generate an interrupt signal to the processor in response to the count exceeding a preselected value. Further, means stores the contents of the program counter in response to receiving the interrupt signal.

According to the present invention there is provided an apparatus for controllably generating processor interrupts in a computer system to correlate a significant event to the value stored in a program counter at the time of the significant event, comprising;

means for counting the number of significant events that occur during operation of the processor;

means for generating a processor interrupt signal in response to the count exceeding a preselected value; and

means for storing the contents of the program counter in response to receiving the interrupt signal.

Also according to the invention there is provided a method for controllably generating processor interrupts in a computer system to correlate a significant event to the value stored in a program counter at the time of the significant event, the method comprising the steps of:

counting the number of significant events that occur during operation of the processor;

generating a processor interrupt signal in response to the count exceeding a preselected value; and

storing the contents of the program counter in response to receiving the interrupt signal.

In another aspect of the present invention, an apparatus is provided for controllably generating interrupts to a processor in a computer system to correlate a significant event to the value stored in the program counter at the time of the significant event. The apparatus includes means for selecting at least one type of significant event from a plurality of types of significant events to be counted. Means counts the number of preselected significant events that occur during the operation of the processor and means generates an interrupt signal to the processor in response to the count exceeding a preselected value. Finally, means stores the contents of the program counter in response to receiving the interrupt signal.

In one particular form the invention provides an apparatus for controllably generating interrupts to a processor in a computer system to correlate a significant event to the value stored in the program counter at the time of the significant event, comprising;

means for counting the number of significant events that occur during the operation of said processor;

means for generating an interrupt signal to said processor in response to said count exceeding one of a plurality of preselected values;

means for selecting one of said plurality of preselected values; and

means for storing the contents of said program counter in response to receiving said interrupt signal.

The present invention can be put into practice in various ways one of which will now be described by way of example with reference to the accompanying drawings in which:-

Figure 1 is a block diagram of a computer system with the performance counters;

Figure 2 is a detailed block diagram of one embodiment of the performance counters; and

Figure 3 is an electrical schematic of one embodiment of the overflow bit control circuit.

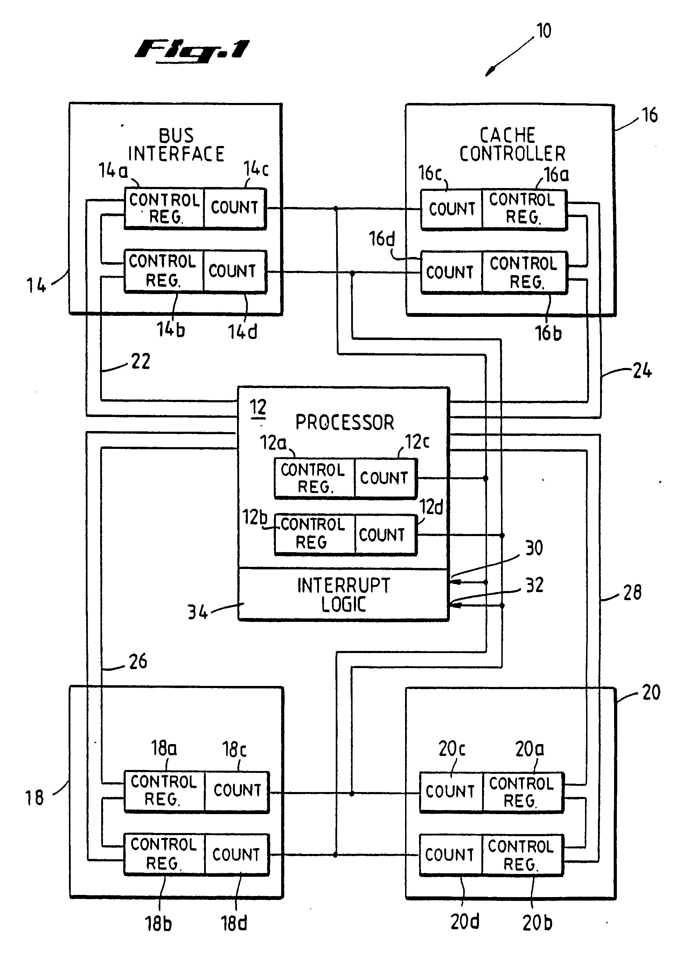

Figure 1 is a top level block diagram of a portion of a computer system 10. The system 10 includes at least one central processing unit (CPU) 12 having access to a plurality of peripheral units 14, 16, 18, 20, which are shown as a bus interface 14 and cache controller 16, as well as generic units 18, 20. The generic units 18, 20 are intended to represent any of a wide variety of specialized units ordinarily present in digital computers. The use of these exemplary units 14, 16, 18, 20 is not intended to limit the invention to use on these particular units 14, 16, 18, 20, nor is the number of units 14, 16, 18, 20 intended to limit the scope of the invention. Rather, it is anticipated that the instant invention is adaptable to any number and type of units employed in a particular computer system 10.

The processor 12 is in communication with each of the units 14, 16, 18, 20 via data busses 22, 24, 26, 28. Typically these data busses are 32-bits wide and are bidirectional so that data may flow in either direction.

In particular, the data busses 22, 24, 26, 28 are each connected to a pair of control registers 14A, 14B -20A, 20B within each of the units 14, 16, 18, 20. Similarly, the processor 12 also includes a pair of control registers 12A, 12B. Each of the control registers 12A, 12B - 20A, 20B is respectively associated with a performance counter 12C, 12D - 20C, 20D.

The performance counters 12C, 12D - 20C, 20D are configured by a value stored in their corresponding control register 12A, 12B - 20A, 20B to keep track of significant events that occur within their respective units 14, 16, 18, 20. Moreover, these performance counters 12C, 12D - 20C, 20D periodically generate an interrupt signal to one of a pair of high priority interrupt input ports 30, 32 of the processor 12.

The processor 12 includes interrupt handling logic 34 that operates to service any incoming interrupt and, in particular, the interrupts occurring at interrupt ports 30, 32. It should be appreciated that since all of the performance counters 12C - 20C are connected to the same interrupt input port 30, it is preferred that only one of the performance counters is enabled at any one time. However, the remainder of the performance counters 12D -20D are connected to the interrupt input port 32 such that one of these performance counters 12D - 20D can be enabled at the same time as one of the performance counters 12C -20C that are connected to interrupt input port 30.

Ordinarily, the performance counters 12C, 12D - 20C 20D within the processor 12 and units 14, 16, 18, 20 are enabled in pairs, so that diametrically opposite significant events may be counted and the ratio of the two counts will reveal the true significance of the events being counted. For example, if the user is interested in determining the performance of the cache controller 16, the processor 12 loads the control registers 16A, 16B so as to enable performance counters 16C, 16D to respectively count cache "misses" and cache "hits." In this manner, the ratio of cache "misses" to cache "hits" is more insightful into the performance of the cache controller 16 than simply inspecting the total number of cache "misses."

Within the interrupt logic 34, the control scheme arbitrates interrupt requests according to priority. Only when the priority of an interrupt request is higher than the current Interrupt Priority Level (IPL) is the IPL raised and the interrupt request serviced.

Most interrupt service routines for software-generated exceptions execute at a fairly low IPL. However, if a serious system failure occurs, the processor raises the IPL to the highest level to prevent interruption until this serious problem is corrected.

Accordingly, the IPL assigned to the interrupt ports 30, 32 has a high enough priority to ensure that the interrupt request is serviced immediately, but not so high as to interfere with system recovery from a serious error. For example, it is preferred that interrupt ports 30, 32 be assigned an IPL greater than the IPL for software-generated interrupts, but less than the IPL for serious system failure.

The interrupt logic 34 services an interrupt request when the currently executing instruction is completed. Additionally, the interrupt logic 34 also services interrupt requests at well-defined points during the execution of long, iterative instructions, such as string instructions. As a general rule, saving additional instruction states in memory is avoided by servicing interrupts when the instruction state can be completely contained in the registers, PSL, and PC. Therefore, during the ordinary course of an interrupt service, the interrupt handling logic 34 has already saved the value stored in the program counter by placing it in a stack. Thus, the interrupt handling routine peculiar to interrupts initiated on the interrupts ports 30, 32 simply removes the value of the program counter stored in the stack and places it in a temporary buffer within the processor 12 until such time it can be written to a file in the main memory (not shown).

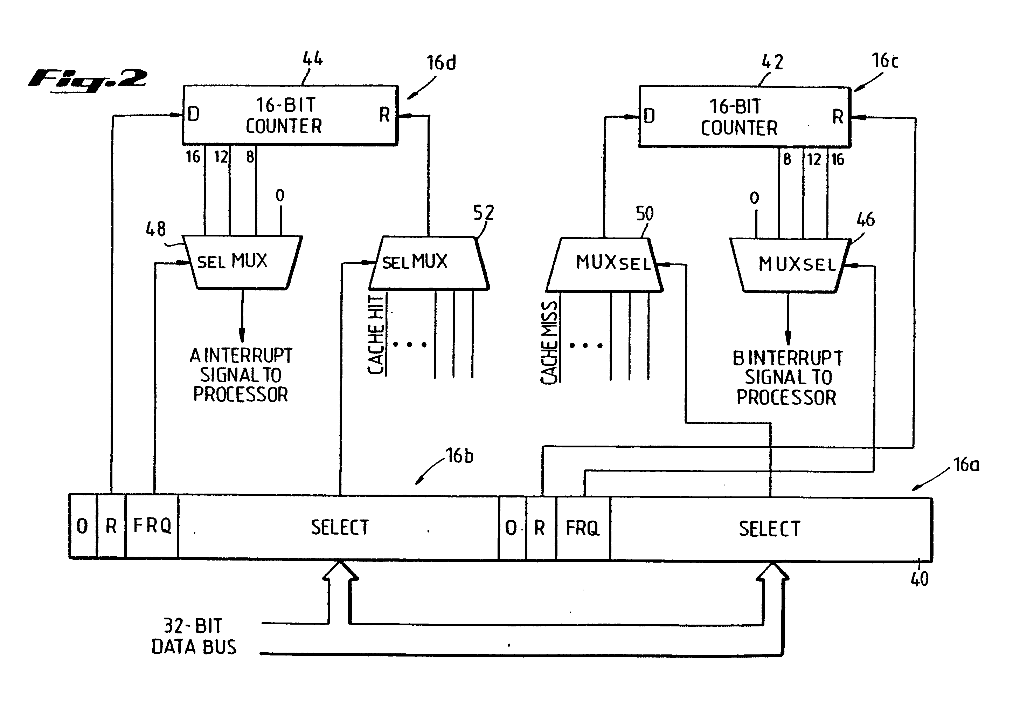

Referring now to Fig. 2, the pair of control registers 16A, 16B, and their associated performance counters 16C, 16D, are illustrated in detail and are generally representative of all of the pairs of control registers 12A, 12B - 20A, 20B and their associated performance counters 12C, 12D - 20C, 20D. The control registers 16A, 16B are shown as a single 32-bit register 40 that is divided into two 16-bit halves corresponding to the control registers 16A, 16B. Each half of the control register 40 includes a single bit overflow signal, a single bit reset signal, a 2-bit frequency signal, and a 12- bit select signal. The reset, frequency, and select bits are all controlled by the processor 12, while the overflow bit is controlled by logic associated with the corresponding control register and performance counter.

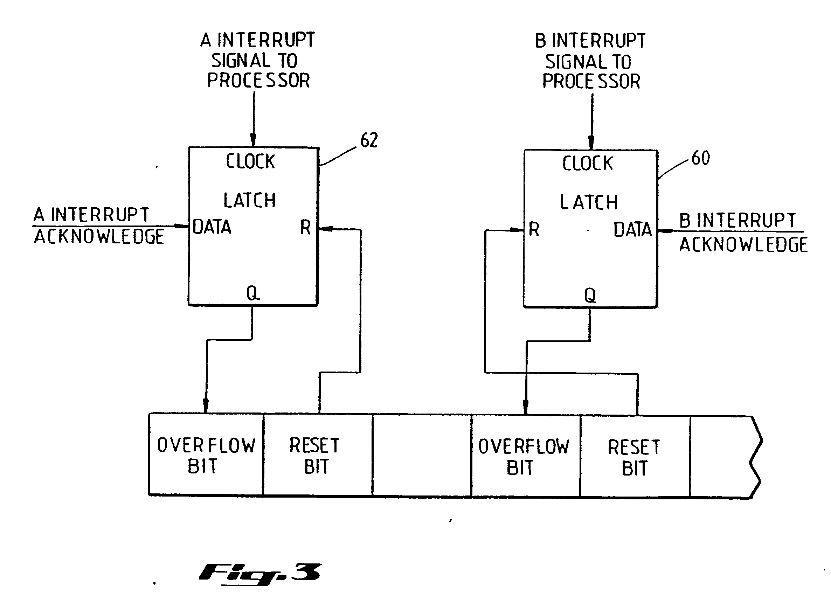

The function and operation of the overflow bit is discussed in greater detail below in connection with Fig. 3.

A pair of 16-bit binary counters 42, 44 correspond to the performance counters 16C, 16D respectively. Each 16-bit counter has sixteen output ports, the 16th, 12th, and 8th, of which are respectively connected to multiplexers 46, 48.

The multiplexers 46,48 are 4-input multiplexers that have their fourth input connected to system ground or a low level logic signal. The select input port to the multiplex 46 is connected to the 2-bit frequency signal of the control register 40. In this manner, the processor 12 controls the frequency at which interrupt signals are delivered to the interrupt input port 30.

For example, by placing the value 00 in the 2-bit frequency position of the control register 40, the processor 12 causes the multiplexer 46 to select its 0 input port, which corresponds to the sixteenth output of the 16-bit binary counter 42. Thus, in this state the multiplexer 46 generates an interrupt signal to the interrupt input port 30 every 65,536 events that are being counted. If, however, the 2-bit frequency is set to the value 01 by the processor 12, the multiplexer 46 operates to pass the 12th output port of the 16-bit binary counter 42 to the interrupt port 30 of the processor 12. This, of course, causes an interrupt signal to be generated every 4,096 events. Similarly, a 2-bit frequency of 10 selects the eighth output port of the 16-bit binary counter 42 and generates an interrupt signal to the interrupt port 30 every 256 events.

This feature is desirable, in that the rate of occurrence of the significant event being counted may differ significantly for different application programs or with the type of significant event being counted. Thus, this feature lends flexibility and allows the user to more closely tailor the interrupt rate to match the rate of occurrence of the significant event being counted.

Further, it should be appreciated that the 16-bit binary counter 42 is disabled from delivering interrupt signals to the interrupt port 30 by placing the binary value 11 in the 2-bit frequency. The 2-bit frequency 11 causes the multiplexer 46 to pass the logically low signal, tied to the fourth input port of the multiplexer 46, to the interrupt port 30 of the processor 12. Since the fourth input port of the multiplexer 46 is tied to a logically "low," level, the multiplexer 46 does not pass an interrupt signal to the processor 12. Thus, the 16-bit binary counter 42 is disabled from delivering interrupt signals.

While the foregoing description of the operation of the multiplexers 46, 48 was limited to the operation of the multiplexer 46, it can be readily appreciated that the operation of the multiplexer 48 is substantially similar, driving interrupt port 32 of the processor 12.

Control of the particular significant event being counted by the 16-bit binary counters 42, 44 is effected via a combination of multiplexers 50, 52 and their associated 12-bit select signals stored in the control register 40. Each 12-bit select signal is delivered to the select input of their respective multiplexers 50, 52, which operate to deliver the selected input signal to the inputs of their respective 16-bit binary counters 42, 44.

While only cache "misses" and cache "hits" are shown connected to the input ports of the multiplexers 50, 52, 44, those skilled in the art of computer design and programming appreciate that a large variety of internal signals within a selected unit of the computer system 10 are advantageously connectable to the input ports of the multiplexers 50, 52. In fact, a 12-bit select signal allows as many as 4096 separate signals/significant events to be connected to each of the multiplexers 50,52.

For example, the significant events connected to the inputs of the multiplexers 50, 52 include cache "misses" and cache "hits" respectively as the first inputs to the multiplexers 50, 52. Thus, the processor 12 causes the 16-bit binary counter 42 to count cache "misses" by storing the binary value 000000000000 in the 12-bit select portion of the control register 40 associated with control register 16A.

Similarly, the processor 12 causes the 16-bit binary counter 44 to count cache "hits" by storing the binary value 000000000000 in the 12-bit select portion of the control register 40 associated with control register 16B. Further, if for example, it is desirable that the cache "hits" and "misses" be counted at a frequency of 4,096 events between interrupt requests, then the 2-bit frequency portions for both of the control registers 16A, 16B are set to the binary value 01. Accordingly, the processor 12 initiates the process by writing the 32-bit control register 40 with the binary value:
01010000000000000101000000000000
Since the processor 12 is initiating the process, the single bit reset portions are also set to insure that the counters 42, 44 are set to zero before beginning the count. Operation of the single bit reset portions is discussed more fully below.

It should also be appreciated that the 16-bit binary counters 42, 44 are alternatively disabled from delivering interrupt signals to the processor 12 by including a logically "low" level connected to one input of each of the multiplexers 50, 52. Thus, the processor 12 can select the input port to each of the multiplexers 50, 52 corresponding to the logically "low" level, thereby delivering a constant "low" level signal to the 16-bit binary counters 42, 44. This, of course, results in the 16-bit binary counters 42, 44 not counting any events and, therefore, not delivering any interrupt signals to the processor 12.

It should be appreciated that the 16-bit binary counters 42, 44 are readily replaceable by numerous types of counters that do not count in a binary fashion. For example, a Johnson counter or a carry/save counter could be readily substituted for the 16-bit binary counters 42, 44 without departing from the spirit and scope of the instant invention. It is only significant that the selected counter be capable of producing an output in response to receiving a preselected number of input signals.

The single bit reset portions of the control register 40 are connected to the reset input ports of the 16-bit binary counters 42, 44. This feature is useful in that it provides the processor 12 with the ability to "know" precisely when the counting process begins. The reset capability is ordinarily effected during a diagnostic routine, where the operation of the counters 42, 44 is verified by, for example monitoring the time required for the counters 42, 44 to count from one "known" value to another "known" value (i.e. 0 to 65,536). For example, the diagnostic routine includes a section that places a preselected value on the 32-bit data bus and is stored in the control register 40. The binary value of the control register 40 includes a logically high level at the fifteenth bit, which corresponds to the reset bit. The 16-bit binary counter 42 responds to the reset bit by clearing each of its sixteen output ports and begins to count the number of low to high logical transition signals delivered from the multiplexer 50.

The previous example is equally valid for the operation of the 16-bit binary counter 44, its associated reset bit at the thirty-first position in the control register 40, and its associated multiplexer 52.

Further, the reset bits are ordinarily not set by the interrupt service routine. Rather, the counters 42, 44 are allowed to free run and continue counting during the interrupt service routine.

Referring now to Fig. 3, an electrical schematic of the hardware associated with the overflow bits is shown in greater detail. Each overflow bit is associated with a latch 60, 62 that has a clock input respectively connected to the outputs of the multiplexers 46, 48, so as to receive interrupt signals delivered to the interrupt input ports 30, 32 of the processor 12. The data input ports of the latches 60, 62 are connected to the processor 12 and, in particular, to the interrupt logic 34 so as to receive an interrupt acknowledge signal delivered by the interrupt logic 34.

The interrupt acknowledge signal is generated by the interrupt logic 34 in response to receiving an interrupt request on the interrupt ports 30, 32 and is simply a handshaking type signal between the units 14, 16, 18, 20 and the interrupt logic 34. Thus, if an additional interrupt is generated by the same 16-bit binary counter before the processor 12 can respond to the currently pending interrupt, then the corresponding latch 60, 62 is clocked so as to store a logically "high" level in that latch 60, 62 and in the corresponding single bit overflow section of the control register 40.

It is possible for this condition to occur, owing to the fact that the IPL assigned to interrupt ports 30, 32 is not the highest available IPL. For example, the processor 12 may be busy handling an interrupt generated by a serious fault within the processor 12. Thus, the interrupt logic 34 does not respond to the interrupt port 30 until the serious fault has been resolved. During this interim period, the cache controller unit 16 continues producing cache "misses" that are counted by the 16-bit binary counter 42, 44 that already has one interrupt request pending.

The processor 12 inspects the overflow bits by reading the control register 40 prior to writing the reset bit. The occasional occurrence of the overflow bit being set does not significantly affect the results of the performance counters 12C, 12D - 20C, 20D. However, continued setting of the overflow bit is an indication to the user that the 2-bit frequency section of the control register 40 is set at too low of a value. In other words, the significant events being counted are occurring at such a high rate that a significant number of the interrupts are not being counted because the interrupt logic 34 simply cannot operate fast enough.

Construction of the incidence chart from the file stored in main memory is accomplished by a separate software program. One such example of a software program usable for constructing an incidence chart is described in Digital Equipment Corporation's "Guide To VAX Performance and Coverage Analyzer," August 1987.

While the invention is susceptible to various modifications and alternative forms, specific embodiments thereof have been shown by way of example in the drawings and are herein described in detail. It should be understood, however, that there is no intention to limit the invention to the particular forms disclosed, but on the contrary, the invention is to cover all modifications, equivalents, and alternatives falling within the scope of the invention as defined by the appended claims.

## Claims

1. An apparatus for controllably generating processor interrupts in a computer system to correlate a significant event to the value stored in a program counter at the time of the significant event, comprising;
means (12c, 12d...20C, 20d) for counting the number of significant events that occur during operation of the processor;
means (34) for generating a processor interrupt signal in response to the count exceeding a preselected value; and
means for storing the contents of the program counter in response to receiving the interrupt signal.

2. An apparatus as claimed in Claim 1, including diagnostic means for resetting the counting means to a preselected value.

3. An apparatus as claimed in Claim 1 or 2, including means for selecting at least one type of significant event from a plurality of types of significant events to be counted.

4. An apparatus as claimed in any of Claims 1 to 3, wherein the interrupt signal generating means include means for varying the preselected value.

5. An apparatus as claimed in Claim 4, wherein the means for varying the preselected value are operable to select from one of a plurality of preselected values.

6. An apparatus, as claimed in any of Claims 1 to 5, including means for compiling the stored program counter values into an incidence chart.

7. A method for controllably generating processor interrupts in a computer system to correlate a significant event to the value stored in a program counter at the time of the significant event, the method comprising the steps of:
counting the number of significant events that occur during operation of the processor;
generating a processor interrupt signal in response to the count exceeding a preselected value; and
storing the contents of the program counter in response to receiving the interrupt signal.

8. A method as claimed in Claim 7, including selecting at least one type of significant event from a plurality of types of significant events to be counted.

9. A method as claimed in Claim 7 or 8, wherein generating a processor interrupt signal includes varying the preselected value.

10. A method as claimed in Claim 7, 8 or 9 including compiling the stored program counter values into an incidence chart.

Fig.1

Fig.2

EP 0 395 281 A2

A INTERRUPT
SIGNAL TO
PROCESSOR

B INTERRUPT
SIGNAL TO
PROCESSOR

CLOCK                                  62

LATCH

A INTERRUPT
ACKNOWLEDGE          DATA          R

Q

CLOCK                                  60

LATCH

R          DATA          B INTERRUPT
                        ACKNOWLEDGE

Q

| OVERFLOW BIT | RESET BIT | | OVERFLOW BIT | RESET BIT | |

Fig. 3

EP 0 395 281 A2